# EUROPEAN PATENT APPLICATION

(11) **EP 4 109 325 A1**
(43) Date of publication of application: **28.12.2022**
(21) Application number: 20927300.2
(22) Date of filing: 24.03.2020
(51) Int. Cl.: G06K 7/00

(54) **TAG IDENTIFICATION AND INVENTORY METHOD AND APPARATUS, READER, MEDIUM AND COMPUTER PROGRAM**

(71) Applicant: Siemens Aktiengesellschaft, 80333 München (DE)
(72) Inventor: DENG, Xiaodong, Beijing 100102 (CN)
(74) Representative: Isarpatent
(86) International application number: PCT/CN2020/080872
(87) International publication number: WO 2021/189248

(57) **Abstract**

The present disclosure relates to a tag identification and inventory method and apparatus, a reader, a medium and a computer program. The tag identification method comprises: a tag signal receiving step, involving: receiving tag signals in a time slot; and a signal processing step, involving: determining whether tag collision occurs in the time slot, and if it is determined that tag collision has occurred, selecting a tag signal from among the received multiple tag signals to identify a corresponding tag, and recording the number of unidentified tags in the time slot.

## Description

### Technical Field

The present disclosure generally relates to the field of wireless technologies, and more specifically to a tag identification method and apparatus, to a tag inventorying method and apparatus, to a computing device, to a medium, and to a computer program.

### Background Art

Generally, a radio frequency identification (RFID) system includes an RFID tag reading device or reader and one or more RFID tags. The tags are compact and require no onboard power supply, and the tags respond to interrogating signals broadcast by the reader. These tags may obtain some energy from the broadcast interrogating signals for onboard processing, and then backscatter some of the incident energy to transmit information, such as an identifier of the tag, to the reader. Because of a potential small size and low cost of RFID tags, the RFID tags may be attached or placed on various objects such as commodities, vehicles, livestock, wild animals, and ID cards or bracelets. Because each RFID tag may be given a unique identification number, an RFID reader may quickly detect and record each RFID tag within a broadcast and reception range of the reader.

The throughput of tag inventorying is defined as how many tags are inventoried in one inventory round. In the EPCglobal Class 1 Generation 2 air interface protocol (that is, the ISO18000-6C standard) for a reader running at an ultrahigh frequency (UHF), a variant of the time-slotted ALOHA is used for inventory tags. At the beginning of an inventory round, the reader issues a query instruction, including information about a quantity of allocated time slots, and a tag generally replies with a 16-bit random number. Generally, there are several time slots for tags to make responses in the inventory round. However, the tags should randomly select one time slot from all available time slots. Time slots are selected based on a quantity of tags, and there are three types of time slots. If only one tag replies in a time slot, the time slot is a successful time slot. If no tag replies in a time slot, the time slot is an empty time slot, and a collision time slot is defined as a time slot in which at least two tags reply. To improve the throughput of tag inventorying, a probability of successful time slots needs to be increased, because the reader may decode a unique identification number in a successful time slot. Theoretically, when durations of the three types of time slots are equal, if a quantity of time slots is equal to a quantity of tags, the tag inventorying efficiency may reach an upper limit of 1/e.

However, because the quantity of tags is unknown in advance, a quantity of time slots allocated by the reader in the inventory round is generally different from a quantity of tags to be inventoried, which results in low throughput of tag inventorying.

To improve the throughput of tag inventorying, three possible solutions may be adopted.

Firstly, the quantity of time slots in an inventory round may be adjusted within a dynamic range. The reader may adjust a quantity of time slots in a next inventory round based on a quantity of time slots in which a collision occurs in a current inventory round. More specifically, if the quantity of time slots in which a collision occurs exceeds a threshold, the reader increases the quantity of time slots by one step size. While if a quantity of empty time slots exceeds the threshold, the quantity of time slots is reduced by one step size. An objective of dynamically setting a quantity of time slots in an inventory round is to match the quantity of time slots with a quantity of uninventoried tags. However, actually, it is difficult to correctly adjust a quantity of time slots because it is difficult to map an exact quantity of collision time slots or empty slots with a threshold and a step size that are in a pair.

Secondly, the quantity of time slots in the inventory round is estimated based on a probability. For example, if n represents the quantity of collision time slots, a lower limit of uninventoried tags is 2*n. Furthermore, there are some studies on the estimation of the quantity of uninventoried tags on the basis of the collision time slots. E*n is an example, where E represents an expected quantity of tags in a collision time slot. However, because the estimation of the quantity of uninventoried tags is based on a probability rather than a detection of each collision time slot, the throughput of tag inventorying may be further improved.

Finally, the throughput of tag inventorying may be maximized if the reader can decode all tags that reply in a collision time slot. Currently, there are some studies on parallel tag inventorying, which allows the reader to decode every tag that replies in a collision time slot. However, parallel tag inventorying does not allow the reader to obtain electronic product codes (EPCs) from all collision tags compatible with the ISO18000-6C standard. For example, the reader may decode respective 16-bit random numbers of a tag A and a tag B, but because the reader acknowledges the tag A with the 16-bit random number of the tag A to obtain the EPC of the tag A, the tag B times out in this process. In other words, in the parallel tag inventorying method, the reader cannot obtain the EPCs of the two tags in the collision time slot to identify the two tags respectively. Therefore, the parallel tag inventorying method cannot improve the throughput of tag inventorying.

Reference document 1: L. Kang, K. Wu, J. Zhang, L. M. Ni. Ddc: "A novel scheme to directly decode the collisions in UHF RFID systems". IEEE Transactions on Parallel and Distributed Systems, 23(2):263-270, 2012

Reference document 2: Meng Jin, Yuan He, Xin Meng, Yilun Zheng, FlipTrace: Practical Parallel Decoding for Backscatter communication. IEEE MobiCom'17, October 16-20, 2017, Snowbird, UT, USA, 275-287

Reference document 3: J. Ou, M. Li, Y. Zheng, Come and be served: Parallel decoding for cots RFID tags. In MobiCom, 2015

Reference document 4: L. Kong, L. He, Y. Gu, M.-Y. Wu, T. He. A parallel identification protocol for RFID systems. In INFOCOM, 2014.

### Summary of the Invention

The brief summary of the present invention is given below to provide a basic understanding of some aspects of the present invention. It should be understood that the summary is not an exhaustive summary of the present invention. The summary is neither intended to determine the key or important part of the present invention, nor to limit the scope of the present invention. The object thereof is merely to give some concepts in a simplified form, as a prelude to the more detailed description presented later.

In view of the above, the present disclosure proposes a tag inventorying method. Unlike probability-based tag estimation, in the tag inventorying method according to the present disclosure, signals received in each time slot in an inventory round are checked. A method such as parallel tag inventorying may be used to determine a quantity of tags that reply in a time slot, and a parallel decoding method is modified as follows: Only one of the tags that reply in a time slot in which a collision occurs is decoded, and a quantity of the other tags in the time slot is determined without decoding the other collision tags. The reader knows a quantity of undecoded tags at the end of a current inventory round, and sets a quantity of time slots in a next inventory round based on the quantity of undecoded tags, so that the throughput of the next inventory round may be optimized.

According to an aspect of the present disclosure, a tag identification method is provided, including: a tag signal receiving step: receiving a tag signal in a time slot; and a signal processing step: determining whether a tag collision occurs in the time slot, and if it is determined that a tag collision occurs, selecting one tag signal from a plurality of received tag signals to identify a corresponding tag, and recording a quantity of unidentified tags in the time slot.

Optionally, in an example of the above aspect, if it is determined that no tag collision occurs in a time slot, when one tag signal is received, a corresponding tag is identified, and a quantity of unidentified tags in the time slot is recorded as 0; or when no tag signal is received, the quantity of unidentified tags in the time slot is recorded as 0.

Optionally, in an example of the above aspect, the method further includes: adding up quantities of unidentified tags recorded in all time slots in one inventory round to obtain a total quantity of unidentified tags in the inventory round, and setting a quantity of time slots in a next inventory round based on the total quantity of unidentified tags.

Optionally, in an example of the above aspect, the quantity of time slots in the next inventory round may be set to be equal to the total quantity of unidentified tags.

Optionally, in an example of the above aspect, selecting one tag signal from a plurality of received tag signals to identify a corresponding tag includes: sending an acknowledgement signal for the selected tag signal, and receiving an electronic product code sent by the corresponding tag for identification.

According to another aspect of the present disclosure, a tag identification apparatus is provided, including: a tag signal receiving unit configured to receive a tag signal in a time slot; and a signal processing unit configured to determine whether a tag collision occurs in the time slot, and if it is determined that a tag collision occurs, select one tag signal from a plurality of received tag signals to identify a corresponding tag, and record a quantity of unidentified tags in the time slot.

According to another aspect of the present disclosure, a tag inventorying method is provided, including: a tag signal receiving step: receiving a plurality of tag signals in a time division manner based on a set quantity of time slots; a successful time slot processing step: identifying a tag corresponding to one tag signal received in each successful time slot in which only the one tag signal is received; a collision time slot determining step: determining whether there is a collision time slot in which a tag collision occurs, and if there is no collision time slot in which a tag collision occurs, ending the method, or if there is a collision time slot in which a tag collision occurs, continuing with the following steps: a collision time slot processing step: selecting one tag signal from a plurality of tag signals received in each collision time slot in which a tag collision occurs, to identify a corresponding tag, and determining a quantity of unidentified tags in the collision time slot; a total unidentified tag quantity determining step: adding up the quantities of unidentified tags in all the collision time slots in one inventory round to obtain a total quantity of unidentified tags in the inventory round; and a cyclic control step: setting a quantity of time slots in a next inventory round based on the determined total quantity of unidentified tags, and performing the steps of the method again from the tag signal receiving step based on the set quantity of time slots.

Optionally, in an example of the above aspect, the quantity of time slots in the next inventory round may be set to be equal to the total quantity of unidentified tags.

Optionally, in an example of the above aspect, selecting one tag signal from a plurality of received tag signals is implemented in at least one of the following manners: randomly selecting one tag signal, selecting the tag signal with maximum energy, and selecting the tag signal with minimum energy.

Optionally, in an example of the above aspect, identifying a corresponding tag further includes: sending an acknowledgement signal for the selected tag signal, and receiving an electronic product code sent by the corresponding tag for identification.

According to another aspect of the present disclosure, a tag inventorying apparatus is provided, including: a tag signal receiving unit configured to receive a plurality of tag signals in a time division manner based on a set quantity of time slots; a successful time slot processing unit configured to identify a tag corresponding to one tag signal received in each successful time slot in which only the one tag signal is received; a collision time slot determining unit configured to determine whether there is a collision time slot in which a tag collision occurs, and if there is no collision time slot in which a tag collision occurs, end the operation, or if there is a collision time slot in which a tag collision occurs, perform operations of the following units : a collision time slot processing unit configured to select one tag signal from a plurality of tag signals received in each collision time slot in which a tag collision occurs, to identify a corresponding tag, and determine a quantity of unidentified tags in the collision time slot; a total unidentified tag quantity determining unit configured to add up the quantities of unidentified tags in all the collision time slots in one inventory round to obtain a total quantity of unidentified tags in the inventory round; and a cyclic control unit configured to set a quantity of time slots in a next inventory round based on the determined total quantity of unidentified tags, and perform, based on the set quantity of time slots, the operation of each unit again from the operation of the tag signal receiving unit.

According to another aspect of the present disclosure, a reading device is provided, including: at least one processor; and a memory coupled to the at least one processor, wherein the memory is configured to store instructions that, when executed by the at least one processor, cause the processor to perform the method described above.

According to another aspect of the present disclosure, a non-transitory machine-readable storage medium is provided, which stores executable instructions that, when executed, cause the machine to perform the method described above.

According to another aspect of the present disclosure, a computer program is provided, the computer program including computer executable instructions that, when executed, cause at least one processor to perform the method described above.

According to another aspect of the present disclosure, a computer program product is provided, which is tangibly stored in a computer-readable medium and includes computer-executable instructions that, when executed, cause at least one processor to perform the method described above.

According to the tag identification method and apparatus and the tag inventorying method and apparatus of the present disclosure, signals received in all time slots of an inventory round are checked, and a parallel tag inventorying method is used to detect a quantity of collision tags, so as to accurately determine a quantity of uninventoried tags.

According to the tag identification method and apparatus and the tag inventorying method and apparatus of the present disclosure, a 16-bit random number of one tag from a plurality of tags that collide is selected for acknowledgement, and a corresponding EPC of the tag may be obtained, thereby implementing compatibility with the ISO 18000 6C standard.

According to the tag identification method and apparatus and the tag inventorying method and apparatus of the present disclosure, because the quantity of allocated time slots is determined based on the accurate quantity of uninventoried tags, the throughput of tag inventorying may be improved.

The tag identification method and apparatus and the tag inventorying method and apparatus according to the present disclosure have a high tag inventorying speed, which is a key performance of an RFID reader. Therefore, an RFID reader using the tag inventorying method according to the present disclosure is more advantageous in applications such as gates where huge amounts of moving tags need to be inventoried.

The tag identification method and apparatus and the tag inventorying method and apparatus according to the present disclosure are compatible with the ISO 18000 6C standard, and therefore have no additional requirements for tags.

### Brief Description of the Drawings

The foregoing and other objectives, features, and advantages of the present invention can be more easily understood with reference to the following descriptions of embodiments of the present invention in conjunction with the accompanying drawings. Components in the accompanying drawings are merely for illustrating the principle of the present invention. In the accompanying drawings, same or similar technical features or components are represented by using same or similar reference signs.
FIG. 1 is a flowchart of an exemplary process of a tag identification method according to an embodiment of the present invention;
FIG. 2 is a block diagram of an exemplary configuration of a tag identification apparatus according to another embodiment of the present disclosure;
FIG. 3 is a flowchart of an exemplary process of a tag inventorying method according to another embodiment of the present invention;
FIG. 4 is a block diagram of an exemplary configuration of a tag inventorying apparatus according to an embodiment of the present disclosure; and
FIG. 5 is a block diagram showing a reading device 500 implementing a tag identification method and a tag inventorying method according to an embodiment of the present disclosure.

**Reference signs**

| | | | |
|---|---|---|---|
| 100: | tag identification method | S101, S102, S103: | steps |
| 200: | tag identification apparatus | 201: | tag signal receiving unit |
| 202: | signal processing unit | 203: | time slot quantity setting unit |
| 300: | tag inventorying method | S301, S302, S303, S304, S305,S306: | steps |
| 400: | tag inventorying apparatus | 401: | tag signal receiving unit |
| 402: | successful time slot | 403: | collision time slot |
| | processing unit | | determining unit |
| 404: | collision time slot processing unit | 405: | total unidentified tag quantity determining unit |
| 406: | cyclic control unit | 500: | reading device |
| 502: | processor | 504: | memory |

### Detailed Description of Embodiments

The subject matter described herein is now discussed with reference to exemplary implementations. It should be understood that the discussion of these implementations is merely intended to help a person skilled in the art to better understand and implement the subject matter described herein, but not to limit the scope of protection, applicability or examples set forth in the claims. The functions and arrangements of the discussed elements can be changed without departing from the scope of protection of the present disclosure. Various processes or components may be omitted, replaced, or added in various examples as required. For example, the described method may be performed in an order different from the one described, and the steps may be added, omitted, or combined. In addition, the features described in some examples can also be combined in other examples.

As used herein, the term "include" and variants thereof represent an open term, which means "including but not limited to". The term "based on" represents "at least partially based on" . The terms "an embodiment" and "the embodiment" represent "at least one embodiment". The term "another embodiment" denotes "at least one other embodiment". The terms "first", "second", and the like may refer to different or the same objects. Other definitions, whether explicit or implicit, can be included below. Unless expressly specified in the context, the definition of a term is consistent throughout the specification.

The present disclosure proposes a tag identification method and a tag inventorying method. Different from probability-based tag estimation, in the tag identification method and the tag inventorying method according to the present disclosure, signals received in all time slots in an inventory round are checked. A method such as parallel tag inventorying may be used to determine a quantity of tags that reply in a time slot, and a parallel decoding method is modified as follows: Only a signal of one of the tags that reply in a time slot in which a collision occurs is decoded, and a quantity of the other tag signals in the time slot is determined without decoding the other collision signals. The reader knows a quantity of undecoded tags at the end of a current inventory round, and sets a quantity of time slots in a next inventory round based on the quantity of undecoded tags, so that the throughput of the next inventory round may be optimized.

The tag identification method according to the embodiments of the present disclosure is described with reference to the accompanying drawings.

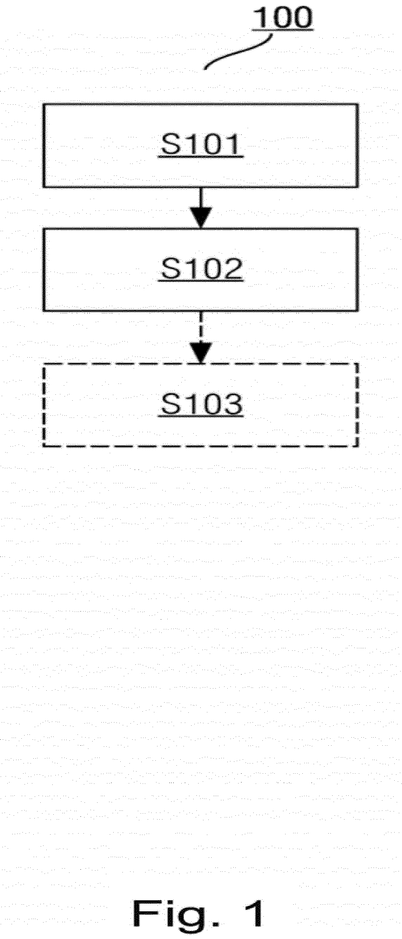

FIG. 1 is a flowchart of an exemplary process of a tag identification method 100 according to an embodiment of the present invention.

In FIG. 1, a tag signal receiving step in box S101 is first performed, that is, a tag signal is received in a time slot.

It may be understood that there may be only one tag in a time slot that replies to a broadcast message of a reader, that is, the reader receives only one tag signal, and such a time slot is called a successful time slot in the specification. Alternatively, there may be no tag in a time slot that replies, that is, the reader receives no tag signal, and such a time slot is called an empty time slot. Alternatively, there may be a plurality of tags that reply, that is, the reader receives a plurality of tag signals and a tag collision occurs, and such a time slot is called a collision time slot.

Therefore, then a signal processing step in box S102 is performed, that is, whether a tag collision occurs in the time slot is determined; and
if it is determined that a tag collision occurs, one tag signal is selected from a plurality of received tag signals to identify a corresponding tag, and a quantity of unidentified tags in the time slot is recorded.

Specifically, identifying a corresponding tag includes: sending an acknowledgement signal for the selected tag signal, and receiving an electronic product code sent by the corresponding tag for identification.

For example, in a time slot, a tag collision occurs between a tag A and a tag B, the reader receives a 16-bit random number "RN16A" sent by the tag A and a 16-bit random number "RN16B" sent by the tag B and selects to send an acknowledgement signal "ACK+RN16A" to the tag A, then the tag A sends its electronic product code EPC, and the reader correctly receives the EPC, so as to complete the identification of the tag.

In an example, if it is determined that no tag collision occurs in a time slot, when one tag signal is received, a corresponding tag is identified, and a quantity of unidentified tags in the time slot is recorded as 0; or when no tag signal is received, the quantity of unidentified tags in the time slot is recorded as 0.

In an example, a method such as parallel tag inventorying may be used to determine a quantity of a plurality of tags that collide in a collision time slot. Because one of the plurality of tags is identified, a quantity of unidentified tags in the collision time slot is calculated by subtracting 1 from the determined quantity of tags that collide. Those skilled in the art may understand a specific process of using the parallel tag inventorying method to determine a quantity of tags that collide in a collision time slot and a quantity of unidentified tags in the collision time slot, and details are not described herein again.

In an example, the tag identification method 100 may further include a step in box S103: adding up quantities of unidentified tags recorded in all time slots in one inventory round to obtain a total quantity of unidentified tags in the inventory round, and setting a quantity of time slots in a next inventory round based on the total quantity of unidentified tags.

Preferably, the quantity of time slots in the next inventory round may be set to be equal to the total quantity of unidentified tags.

Table 1 below shows tag signals received by a reader and a determined quantity of unidentified tags in different types of time slots.

**Table 1**

| Time Slot Type | Acknowledgment Information of the Reader | Quantity of Unidentified Tags |
|---|---|---|
| Empty time slot | None | 0 |
| Successful time slot | A 16-bit random number | 0 |
| Collision time slot | A selected 16-bit random number | Actual quantity of unidentified tags, that is, a quantity of collision tags minus 1 |

In the example shown in Table 1, in the empty time slot, the reader receives no random number and determines the quantity of unidentified tags as 0. In the successful time slot, the reader receives a 16-bit random number, identifies a corresponding tag, and determines the quantity of unidentified tags as 0. In the collision time slot, the reader selects a 16-bit random number of a tag signal for acknowledgement, identifies a corresponding tag, and uses the method of parallel tag inventorying to determine and output the quantity of unidentified tags.

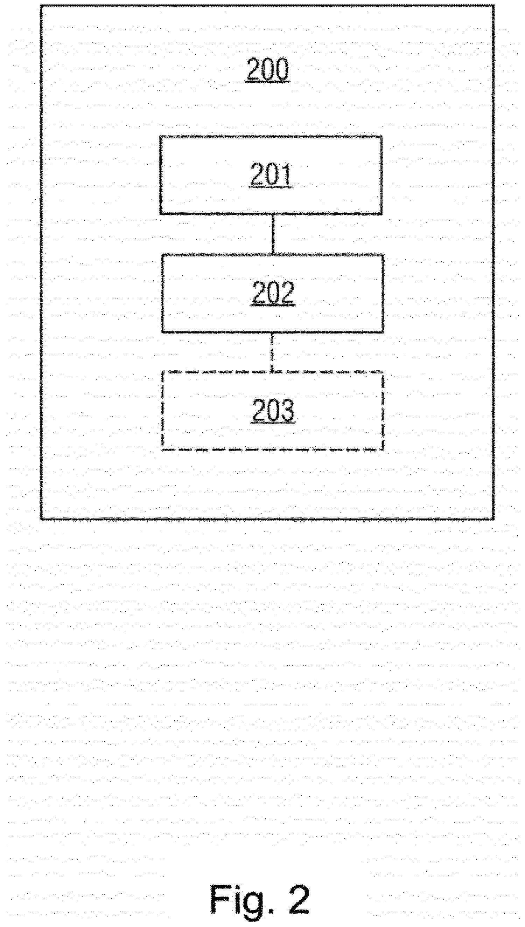

FIG. 2 is a block diagram of an exemplary configuration of a tag identification apparatus 200 according to another embodiment of the present disclosure.

The tag identification apparatus 200 includes: a tag signal receiving unit 201 and a signal processing unit 202.

The tag signal receiving unit 201 is configured to receive a tag signal in a time slot.

The signal processing unit 202 is configured to determine whether a tag collision occurs in the time slot, and if it is determined that a tag collision occurs, select one tag signal from a plurality of received tag signals to identify a corresponding tag, and record a quantity of unidentified tags in the time slot.

The signal processing unit 202 is further configured to: if it is determined that no tag collision occurs in a time slot, when one tag signal is received, identify a corresponding tag, and record a quantity of unidentified tags in the time slot as 0; or when no tag signal is received, record the quantity of unidentified tags in the time slot as 0.

In an example, the tag identification apparatus 200 further includes a time slot quantity setting unit 203. The time slot quantity setting unit 203 is configured to add up quantities of unidentified tags recorded in all time slots in one inventory round to obtain a total quantity of unidentified tags in the inventory round, and set a quantity of time slots in a next inventory round based on the total quantity of unidentified tags.

Preferably, the quantity of time slots in the next inventory round is set to be equal to the total quantity of unidentified tags.

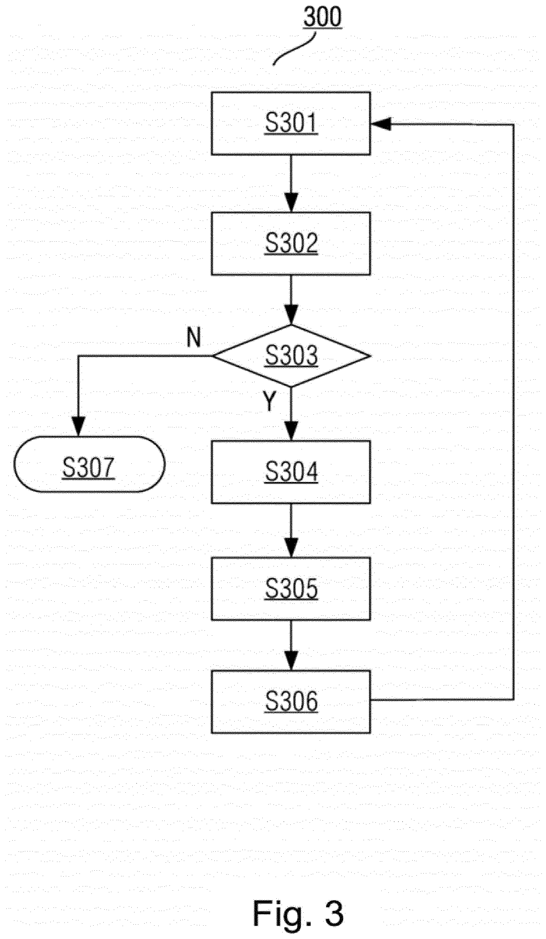

A detailed process of inventorying a plurality of tags in a plurality of inventory rounds is described below with reference to FIG. 3. FIG. 3 is a flowchart of an exemplary process of a tag inventorying method 300 according to another embodiment of the present invention.

In FIG. 3, a tag signal receiving step in box S301 is first performed, that is, a plurality of tag signals are received in a time division manner based on a set quantity of time slots.

When the tag identification method 300 according to the present disclosure is performed, the steps of the method are first performed in a first inventory round. The inventory round refers to a process in which a reader receives all tag signals based on a preset quantity of time slots and then identifies all tags that can be identified. This process is called one inventory round. Then, the quantity of time slots is adjusted, a next inventory round starts, and the steps of the method are repeated.

Generally, a plurality of inventory rounds are required for tag identification until all tags can be identified. The tag identification method according to the present disclosure conforms to the EPCglobal Class 1 Generation 2 air interface protocol, and it is considered that an identified tag may not reply to a broadcast message of the reader.

Then, a successful time slot processing step in S302 is performed, that is, a tag corresponding to one tag signal received in each successful time slot in which only the one tag signal is received is identified.

Next, a collision time slot determining step in S303 is performed, that is, whether there is a collision time slot in which a tag collision occurs is determined, and if there is no time slot in which a tag collision occurs, it indicates that all tags may be identified, and the method proceeds until S307 is performed, that is, the method ends. If there is a time slot in which a tag collision occurs, the following steps continue to be performed.

Then, a collision time slot processing step in box S304 is performed, that is, one tag signal is selected from a plurality of tag signals received in each collision time slot in which a tag collision occurs, to identify a corresponding tag, and a quantity of unidentified tags in the collision time slot is determined.

One tag may be selected, according to a preset rule, from a plurality of tags that collide in a collision time slot for identification. Specifically, the preset rule may be, for example, randomly selecting one tag signal, selecting the tag signal with maximum energy, selecting the tag signal with minimum energy, or the like. A corresponding rule may be set according to requirements, and details are not described herein again.

Specifically, identifying a corresponding tag includes: sending an acknowledgement signal for the selected tag signal, and receiving an electronic product code sent by the corresponding tag for identification. Those skilled in the art may understand that the acknowledgement signal is sent for the tag signal, that is, the one tag signal received in the successful time slot, and the electronic product code sent by the corresponding tag is received for identification.

In the method of the present disclosure, the electronic product code of the tag may be obtained, so that compatibility with the ISO18000-6C protocol can be implemented.

An unselected tag is not identified, but a quantity of unidentified tags needs to be recorded. In an example, a method such as parallel tag inventorying may be used to determine a total quantity of tags that collide in a collision time slot, and a quantity of unidentified tags in a collision slot equals to the total quantity of tags that collide minus 1.

The collision time slot processing step is performed, so that a quantity of unidentified tags in all collision time slots in an inventory round may be determined.

Next, a total unidentified tag quantity determining step in box S305 is performed, that is, the quantities of unidentified tags in all the collision time slots in one inventory round are added up to obtain a total quantity of unidentified tags in the inventory round.

Herein, the total quantity of unidentified tags in the inventory round may be obtained by adding up the quantities of unidentified tags in all the collision time slots in the inventory round, and the total quantity of unidentified tags is a quantity of tags to be read in a next inventory round. In this way, an exact quantity of tags to be read in the next inventory round may be accurately known.

In an example, a summator may be provided to add up quantities of unidentified tags in all collision time slots in one inventory round to obtain a total quantity of unidentified tags in the inventory round, and the summator may be reset at the start of a next inventory round to calculate a total quantity of unidentified tags in the next inventory round.

Then, a cyclic control step in box S306 is performed. Specifically, a quantity of time slots in a next inventory round is set based on the determined total quantity of unidentified tags in the previous step, and the steps of the method 300 are performed again from step S301 based on the set quantity of time slots.

According to the method 300 of the present disclosure, the steps of the method 300 are repeated based on a set quantity of time slots in each inventory round until it is determined in step S303 that there is no time slot in which a tag collision occurs, that is, all tags may be identified, and in this case, the method 300 may be ended.

In step S306, preferably, the quantity of time slots in the next inventory round may be set to be equal to the total quantity of unidentified tags.

In the method of the present disclosure, because the determined total quantity of unidentified tags is accurate, and the quantity of time slots is determined based on a quantity of tags to be identified in the next inventory round, the throughput of tag inventorying may be improved.

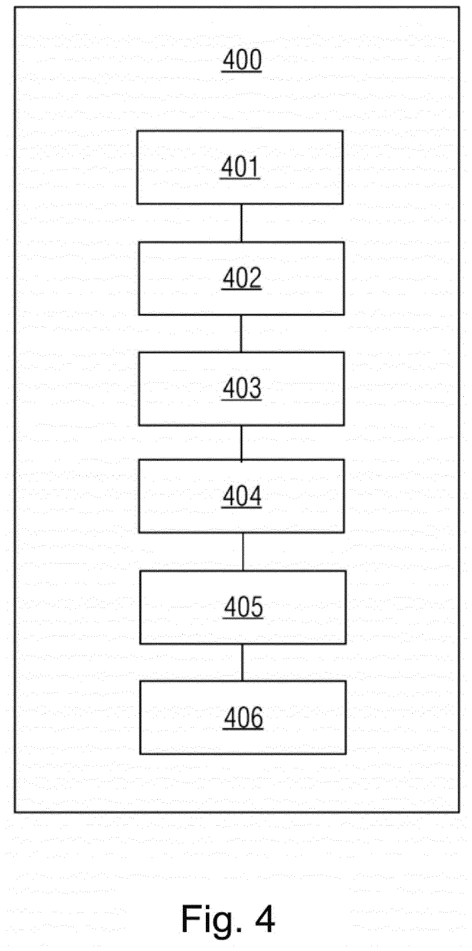

FIG. 4 is a block diagram of an exemplary configuration of a tag inventorying apparatus 400 according to an embodiment of the present disclosure.

The tag identification apparatus 400 includes: a tag signal receiving unit 401, a successful time slot processing unit 402, a collision time slot determining unit 403, a collision time slot processing unit 404, a total unidentified tag quantity determining unit 405, and a cyclic control unit 406.

The tag signal receiving unit 401 is configured to receive a plurality of tag signals in a time division manner based on a set quantity of time slots.

The successful time slot processing unit 402 is configured to identify a tag corresponding to one tag signal received in each successful time slot in which only the one tag signal is received.

The collision time slot determining unit 403 is configured to determine whether there is a collision time slot in which a tag collision occurs, and if there is no collision time slot in which a tag collision occurs, end the operation, or if there is a collision time slot in which a tag collision occurs, perform operations of the following units.

The collision time slot processing unit 404 is configured to select one tag signal from a plurality of tag signals received in each collision time slot in which a tag collision occurs, to identify a corresponding tag, and determine a quantity of unidentified tags in the collision time slot.

The total unidentified tag quantity determining unit 405 is configured to add up the quantities of unidentified tags in all the collision time slots in one inventory round to obtain a total quantity of unidentified tags in the inventory round.

The cyclic control unit 405 is configured to set a quantity of time slots in a next inventory round based on the determined total quantity of unidentified tags, and perform, based on the set quantity of time slots, the operation of each unit again from the operation of the tag signal receiving unit.

The cyclic control unit 405 is further configured to set the quantity of time slots in the next inventory round to be equal to the total quantity of unidentified tags.

The collision time slot processing unit 404 is further configured to select one tag signal from the plurality of received tag signals in at least one of the following manners: randomly selecting one tag signal, selecting the tag signal with maximum energy, and selecting the tag signal with minimum energy.

The collision time slot processing unit 404 is further configured to send an acknowledgement signal for the selected tag signal, and receive an electronic product code sent by the corresponding tag for identification.

According to the tag identification method and apparatus and the tag inventorying method and apparatus of the present disclosure, signals received in all time slots of an inventory round may be checked, and a parallel tag inventorying method is used to detect a quantity of collision tags, so as to accurately determine a quantity of uninventoried tags.

According to the tag identification method and apparatus and the tag inventorying method and apparatus of the present disclosure, a 16-bit random number of one tag from a plurality of tags that collide is selected for acknowledgement, and a corresponding EPC of the tag may be obtained, thereby implementing compatibility with the ISO 18000 6C standard.

According to the tag inventorying method and apparatus of the present disclosure, because the quantity of allocated time slots is determined based on the accurate quantity of uninventoried tags, the throughput of tag inventorying may be improved.

The tag inventorying method and apparatus according to the present disclosure have a high tag inventorying speed, which is a key performance of an RFID reader. Therefore, an RFID reader using the tag inventorying method according to the present disclosure is more advantageous in applications such as gates where huge amounts of moving tags need to be inventoried.

The tag inventorying method and apparatus according to the present disclosure are compatible with the ISO 18000 6C standard, and therefore have no additional requirements for tags.

It should be further noted that the tag identification apparatus 200 shown in FIG. 2 and the tag inventorying apparatus 400 shown in FIG. 4 and structures of constituent units thereof are merely exemplary, and those skilled in the art may modify the structural block diagrams in FIG. 2 and FIG. 4 according to requirements.

Details about operations and functions of various parts of the tag identification apparatus 200 shown in FIG. 2 and the tag inventorying apparatus 400 shown in FIG. 4 may be the same as or similar to related parts in the embodiments of the tag identification method 100 and the tag inventorying method 300 in the present disclosure described in conjunction with FIG. 1 and FIG. 3, and are not described herein.

As described above, with reference to FIG. 1 to FIG. 4, the embodiments of the tag identification method and apparatus and the tag inventorying method and apparatus according to the embodiments of the present disclosure are described. The above tag identification apparatus and the tag inventorying apparatus may be implemented by hardware, or may be implemented by software or a combination of hardware and software.

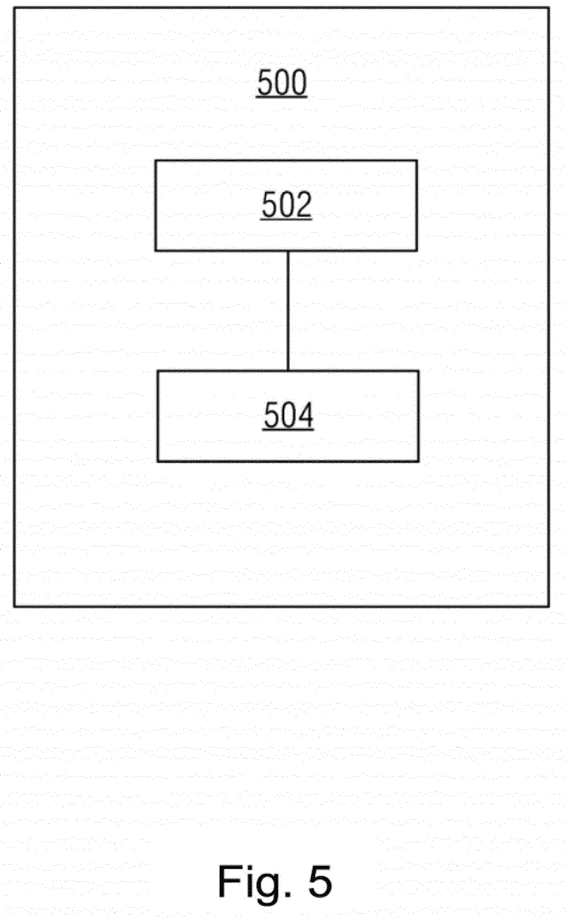

FIG. 5 is a block diagram showing a reading device 500 implementing a tag identification method and a tag inventorying method according to an embodiment of the present disclosure. According to an embodiment, the reading device 500 may include at least one processor 502, and the processor 502 executes at least one computer-readable instruction (i.e., the above element implemented in the form of software) stored or encoded in a computer-readable storage medium (i.e., a memory 504).

In an embodiment, computer-executable instructions are stored in a memory 504, and when executed, cause at least one processor 502 to implement the tag identification method or tag inventorying method described above with reference to FIG. 1 or FIG. 3, respectively.

It should be understood that the computer-executable instructions stored in the memory 504, when executed, cause the at least one processor 502 to perform various operations and functions described above in conjunction with FIG. 1 to FIG. 4 in the embodiments of the present disclosure.

According to an embodiment, a non-transitory machine-readable medium is provided. The non-transitory machine-readable medium may include machine-executable instructions (i.e., the above elements implemented in the form of software) that, when executed by a machine, cause the machine to perform various operations and functions described above in conjunction with FIG. 1 to FIG. 4 in the embodiments of the present disclosure.

According to an embodiment, a computer program is provided, which includes computer-executable instructions that, when executed, cause at least one processor to perform various operations and functions described above in conjunction with FIG. 1 to FIG. 4 in the embodiments of the present disclosure.

According to an embodiment, a computer program product is provided, which includes computer-executable instructions that, when executed, cause at least one processor to perform various operations and functions described above in conjunction with FIG. 1 to FIG. 4 in the embodiments of the present disclosure.

Exemplary embodiments are described above in combination with the specific embodiments described in the accompanying drawings, but do not represent all the embodiments that can be implemented or fall within the scope of protection of the claims. The term "exemplary" used throughout the present specification means "used as an example, an instance or an illustration", but does not mean "preferred" or "advantageous" over the other embodiments. For the purpose of providing an understanding of the described technologies, the specific embodiments include specific details. However, the technologies can be implemented without the specific details. In some embodiments, in order to avoid obscuring the described concepts in the embodiments, commonly known structures and apparatuses are shown in the form of a block diagram.

The descriptions above of the present disclosure are provided to enable any person of ordinary skill in the art to implement or use the present disclosure. For a person of ordinary skill in the art, various modifications made to the present disclosure are obvious and the general principles defined herein may also be applied to other variants without departing from the scope of protection of the present disclosure. Therefore, the present disclosure is not limited to the examples and designs described herein, and corresponds to the widest scope in accordance with the principles and novel features disclosed herein.

## Claims

1. A tag identification method, comprising:
a tag signal receiving step: receiving a tag signal in a time slot; and
a signal processing step: determining whether a tag collision occurs in the time slot, and if it is determined that a tag collision occurs, selecting one tag signal from a plurality of received tag signals to identify a corresponding tag, and recording a quantity of unidentified tags in the time slot.

2. The method as claimed in claim 1, wherein if it is determined that no tag collision occurs in a time slot,
and when one tag signal is received, identifying a corresponding tag, and recording a quantity of unidentified tags in the time slot as 0; or
when no tag signal is received, recording the quantity of unidentified tags in the time slot as 0.

3. The method as claimed in claim 1 or 2, further comprising: adding up quantities of unidentified tags recorded in all time slots in one inventory round to obtain a total quantity of unidentified tags in the inventory round, and setting a quantity of time slots in a next inventory round based on the total quantity of unidentified tags.

4. The method as claimed in claim 3, wherein the quantity of time slots in the next inventory round is set to be equal to the total quantity of unidentified tags.

5. The method as claimed in claim 1 or 2, wherein selecting one tag signal from a plurality of received tag signals to identify a corresponding tag comprises: sending an acknowledgement signal for the selected tag signal, and receiving an electronic product code sent by the corresponding tag for identification.

6. A tag identification apparatus, comprising:
a tag signal receiving unit configured to receive a tag signal in a time slot; and
a signal processing unit configured to determine whether a tag collision occurs in the time slot, and if it is determined that a tag collision occurs, select one tag signal from a plurality of received tag signals to identify a corresponding tag, and record a quantity of unidentified tags in the time slot.

7. A tag inventorying method, comprising:
a tag signal receiving step: receiving a plurality of tag signals in a time division manner based on a set quantity of time slots;
a successful time slot processing step: identifying a tag corresponding to one tag signal received in each successful time slot in which only the one tag signal is received;
a collision time slot determining step: determining whether there is a collision time slot in which a tag collision occurs, and if there is no collision time slot in which a tag collision occurs, ending the method, or if there is a collision time slot in which a tag collision occurs, continuing with the following steps:
a collision time slot processing step: selecting one tag signal from a plurality of tag signals received in each collision time slot in which a tag collision occurs, to identify a corresponding tag, and determining a quantity of unidentified tags in the collision time slot;
a total unidentified tag quantity determining step: adding up the quantities of unidentified tags in all the collision time slots in one inventory round to obtain a total quantity of unidentified tags in the inventory round; and
a cyclic control step: setting a quantity of time slots in a next inventory round based on the determined total quantity of unidentified tags, and performing the steps of the method again from the tag signal receiving step based on the set quantity of time slots.

8. The method as claimed in claim 7, wherein the quantity of time slots in the next inventory round is set to be equal to the total quantity of unidentified tags.

9. The method as claimed in claim 7, wherein selecting one tag signal from a plurality of received tag signals is implemented in at least one of the following manners:
randomly selecting one tag signal, selecting the tag signal with maximum energy, and selecting the tag signal with minimum energy.

10. The method as claimed in claim 7, wherein identifying a corresponding tag comprises: sending an acknowledgement signal for the selected tag signal, and receiving an electronic product code sent by the corresponding tag for identification.

11. A tag inventorying apparatus, comprising:
a tag signal receiving unit configured to receive a plurality of tag signals in a time division manner based on a set quantity of time slots;
a successful time slot processing unit configured to identify a tag corresponding to one tag signal received in each successful time slot in which only the one tag signal is received;
a collision time slot determining unit configured to determine whether there is a collision time slot in which a tag collision occurs, and if there is no collision time slot in which a tag collision occurs, end the operation, or if there is a collision time slot in which a tag collision occurs, perform operations of the following units:
a collision time slot processing unit configured to select one tag signal from a plurality of tag signals received in each collision time slot in which a tag collision occurs, to identify a corresponding tag, and determine a quantity of unidentified tags in the collision time slot;
a total unidentified tag quantity determining unit configured to add up the quantities of unidentified tags in all the collision time slots in one inventory round to obtain a total quantity of unidentified tags in the inventory round; and
a cyclic control unit configured to set a quantity of time slots in a next inventory round based on the determined total quantity of unidentified tags, and perform, based on the set quantity of time slots, the operation of each unit again from the operation of the tag signal receiving unit.

12. A reading device (500), comprising:
at least one processor (502); and
a memory (504) coupled to the at least one processor (502), wherein the memory is configured to store instructions that, when executed by the at least one processor (502), cause the processor (502) to perform the method as claimed in any one of claims 1 to 5 and 7 to 10.

13. A non-transitory machine-readable storage medium storing executable instructions that, when executed, cause the machine to perform the method as claimed in any one of claims 1 to 5 and 7 to 10.

14. A computer program, comprising computer-executable instructions that, when executed, cause at least one processor to perform the method as claimed in any one of claims 1 to 5 and 7 to 10.

15. A computer program product tangibly stored on a computer-readable medium, and comprising computer-executable instructions that, when executed, cause at least one processor to perform the method as claimed in any one of claims 1 to 5 and 7 to 10.
